Europäisches Patentamt

European Patent Office

Office européen des brevets

(11) Publication number: **0 141 670**
**B1**

(12) **EUROPEAN PATENT SPECIFICATION**

(45) Date of publication of patent specification: **11.10.89**

(21) Application number: **84307646.4**

(22) Date of filing: **06.11.84**

(51) Int. Cl.⁴: **G 01 G 13/00, G 01 G 13/16**

(54) **Collection chute for automatic weighing apparatus.**

(30) Priority: **07.11.83 JP 172655/83**

(43) Date of publication of application:
**15.05.85 Bulletin 85/20**

(45) Publication of the grant of the patent:
**11.10.89 Bulletin 89/41**

(84) Designated Contracting States:
**DE FR GB IT**

(56) References cited:
**EP-A-0 052 498**
**EP-A-0 074 261**
**EP-A-0 101 313**

(73) Proprietor: **KABUSHIKI KAISHA ISHIDA KOKI
SEISAKUSHO**
**44, Shogoin Sannou-cho Sakyo-ku**
**Kyoto-shi Kyoto 606 (JP)**

(72) Inventor: **Ueda, Kenji**
**1-1, 2-chome Ohe Miamifukunishi-cho**
**Nisigyo-ku Kyoto-shi Kyoto (JP)**

(74) Representative: **Fane, Christopher Robin King
et al**
**HASELTINE LAKE & CO. Hazlitt House 28
Southampton Buildings Chancery Lane
London, WC2A 1AT (GB)**

Courier Press, Leamington Spa, England.

## Description

The present invention relates to automatic weighing apparatus, for example combinatorial weighing apparatus, and is more particularly concerned with a collection chute assembly for such apparatus.

An automatic combinatorial weighing apparatus may operate by supplying articles to be weighed to a plurality of weighing machines arranged in a circular array, effecting a combinatorial arithmetic operation on weight-indicating outputs of the weighing machines, selecting a combination of weights which is equal or closest in sum total to a target weight, and discharging the articles from the weighing machines which give such a weight combination. For collecting the articles from the weighing machines selected by the combinatorial arithmetic operation and supplying them to a packaging apparatus or the like, the automatic weighing apparatus may have a collection chute in the form of a hollow inverted conical body, narrowing in the downward direction, disposed below weighing hoppers of the weighing machines and having a widely open upper end.

Such an automatic weighing apparatus could be given an increased processing ability per unit time if the interval between successive discharges of weighed articles could be shortened. However, as this interval is progressively shortened, there is a danger that articles discharged in one weighing cycle will tend to get close to those discharged in the preceding cycle, while they slide down the chute, and eventually become mixed therewith so as to be no longer separate when delivered to the packaging machine.

One solution to the above problem would be to provide a steeply inclined slide surface in the collection chute for causing articles to slide at a higher rate. This arrangement would necessarily result in increased vertical dimensions of the collection chute, and hence the weighing apparatus would be of an increased height.

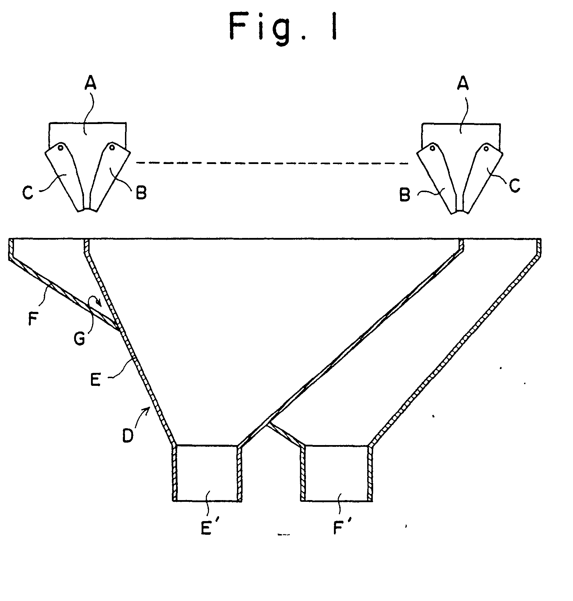

There has been proposed a collection chute structure D, as shown in Fig. 1 of the accompanying drawings, composed of an inner chute E and an outer chute F. A plurality of weighing hoppers A are arranged in a circular pattern, and each of the weighing hoppers A has an inwardly openable gate B and an outwardly openable gate C. The inner chute E has an upper portion disposed in confronting relation in the gates B for receiving articles discharged from the gates B of the weighing hoppers A, and the outer chute F has an upper portion disposed in confronting relation to the gates C for receiving articles discharged from the gates C. The inner and outer chutes E, F have respective discharge ports E′, F′ for supplying articles to the packaging apparatus. By alternately or simultaneously opening the gates B, C of the weighing hoppers A, articles are separated into the inner and outer chutes E, F before they are supplied to the packaging apparatus. The above conventional collection chute arrangement is disclosed in U.S. Patent No. 4,399,880.

However, because of differences in respective lengths and angles of inclination of the slide surfaces of the inner and outer chutes E, F, different times are required for the articles to slide through the inner and outer chutes E, F. Furthermore, there is a narrowed gap G formed above a position where the slide surfaces of the inner and outer chutes E, F intersect. Any articles that happen to enter the gap G are caused to slide down at a reduced speed, and the weighing operation of the weighing apparatus has to be controlled so as to allow for the reduced slide rate of retarded articles.

There has been proposed a further collection chute structure also composed of a plurality of component parts according to earlier European patent application 83304689.3 published as EP—A—0101313 (document under Art. 54(3) EPC).

According to the present invention there is provided an automatic weighing apparatus having a plurality of weighing hoppers, for holding articles being weighed, arranged in a circular array above a collection chute assembly which narrows substantially conically in the downward direction and which comprises:

first and second mutually-similar chute structures including respective inner wall portions defining respective inner chutes, that are substantially semi-circular in horizontal cross-sectional form and are arranged to opposite sides respectively of a common vertical diametrical plane, and including also respective outer wall portions that are substantially semi-circular in horizontal cross-sectional form and extend respectively around the said inner wall portions at a distance therefrom so that an outer chute is defined between the inner and outer wall portions of each of the said chute structures;

each of the said weighing hoppers having first and second gates that can be opened respectively to discharge the hopper selectively into the inner or outer chute of the chute structure below the hopper concerned, and

the said chute assembly further comprising first and second outlet chutes, for providing respective separate outlets for individual weighed batches of such articles,

the first outlet chute having an upper rim defining the inlet opening of that chute and extending in part adjacent to the lower end of the inner chute of the said second chute structure and in part adjacent to the lower end of the outer wall portion of the said first chute structure so that a first area of the said inlet opening is located to the same side of the said diametrical plane as the said second chute structure, for admitting articles that have passed through the said inner chute of that structure, and so that a second area of that inlet opening is located to the other side of the said diametrical plane, for admitting articles that have passed through the outer chute of the said first chute structure, and

the second outlet chute having an upper rim defining the inlet opening of that chute and extending in part adjacent to the lower end of the inner chute of the said first chute structure and in part adjacent to the lower end of the outer wall portion of the said second chute structure so that a first area of the inlet opening of the second outlet chute is located to the same side of the said diametrical plane as the said first chute structure, for admitting articles that have passed through the said inner chute of that structure, and so that a second area of that inlet opening is located to the same side of the said diametrical plane as the said second chute structure, for admitting articles that have passed through the outer chute of the said second chute structure.

In designing an embodiment of the invention, the specified relationships between the components of the collection chute assembly enable a better balance to be achieved, as compared with the apparatus of Fig. 1, between the various overall path lengths of articles passing through the assembly to the two outlets thereof.

Reference will now be made, by way of example, to the accompanying drawings, in which:

Fig. 1 is a vertical cross-sectional view of a conventional collection chute;

Fig. 2 is a front elevational view, partly in cross section, of an automatic combinatorial weighing apparatus embodying the present invention;

Fig. 3 is an exploded perspective view of components of a collection chute assembly included in Fig. 2;

Fig. 4 is a cross-sectional view taken along line Y-Y of Fig. 2;

Fig. 5 is a cross-sectional view taken along line Z-Z of Fig. 4;

Fig. 6 is an exploded perspective view of components of a collection chute assembly for another embodiment of the present invention; and

Fig. 7 is a plan view of the collection chute assembly illustrated in Fig. 6.

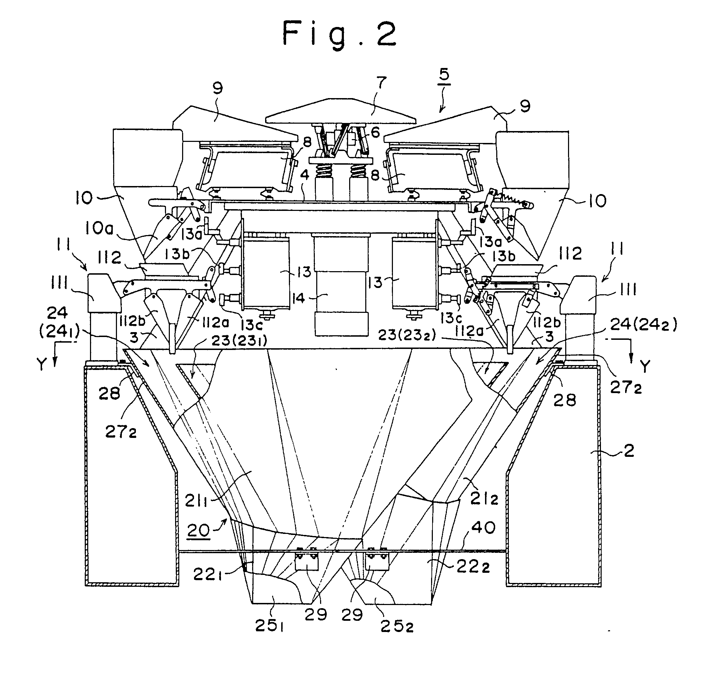

The automatic combinatorial weighing apparatus of Fig. 2, has a base 2, a support table 4 supported by a plurality of legs 3 on and above the base 2, and a distributive supply device 5 mounted on the support table 4 for distributing and supplying articles. The distributive supply device 5 is composed of a distribution table 7 mounted by a vibrator 6 centrally on the support table 4, a plurality of radial supply troughs 9 mounted by respective vibrators 8 on the support table 4 and disposed below the outer peripheral edge of the distribution table 7, and a plurality of pool hoppers 10 mounted on the outer peripheral edge of the support table 4 and disposed below radially outer ends of the troughs 9 in radially aligned relation therewith. The distributive supply device 5 is supplied with articles to be weighed which are delivered onto the distribution table 7 from a charging chute of a supply conveyor (not shown). The distribution table 7 with the articles thereon is vibrated by the vibrator 6 for a prescribed period of time for feeding the articles radially outwardly and then into the troughs 9. The troughs 9 with the articles fed therein are vibrated by their respective vibrators 8 for progressively feeding the articles toward the radially outer ends thereof, from which the articles are supplied to the corresponding pool hoppers 10. Each of the pool hoppers 10 has a single gate 10a which is opened to discharge the supplied articles into one of a plurality of weighing hoppers of respective weighing machines described below.

A plurality of weighing machines 11 are mounted on the base 2 in a circular array and positioned respectively below the pool hoppers 10, there being as many weighing machines 11 as there are pool hoppers 10. Each of the weighing machines 11 is composed of a weight detector 111 and a weighing hopper 112 attached thereto. Each of the weighing hoppers 112 comprises an inner gate 112a openable inwardly toward the center of the weighing apparatus and an outer gate 112b openable outwardly away from the center of the weighing apparatus.

A plurality of hopper opening and closing devices 13 are mounted on a lower surface of the support table 4 in radial alignment respectively with the weighing hoppers 112. Each of the hopper opening and closing devices 13 has three push rods 13a, 13b, 13c for actuating the gate 1a of one of the pool hoppers 10 and the two gates 112a, 112b of one of the weighing hoppers 112. The hopper opening and closing devices 13 are activated by a motor 14 disposed on a lower central surface of the support table 4 for projecting the push rods 13a, 13b, 13c thereby to open the gates 10a, 112a, 112b, respectively.

A collection chute assembly 20 is disposed below the weighing hoppers 112 and has an overall inverted conical shape. The collection chute assembly 20 is composed of first and second upper chutes $21_1$, $21_2$, and first and second lower (outlet) chutes $22_1$, $22_2$. The assembly 20 with the four chute components assembled together has at its upper end a substantially circular inner inlet port 23 for receiving articles discharged from the inner gates 112a of the weighing hoppers 112, and an annular outer inlet port 24 extending around the inner inlet port 23 for receiving articles discharged from the outer gates 112b of the weighing hoppers 112. The assembly 20 also has at its lower end a pair of first and second outlet ports $25_1$, $25_2$ for discharging articles.

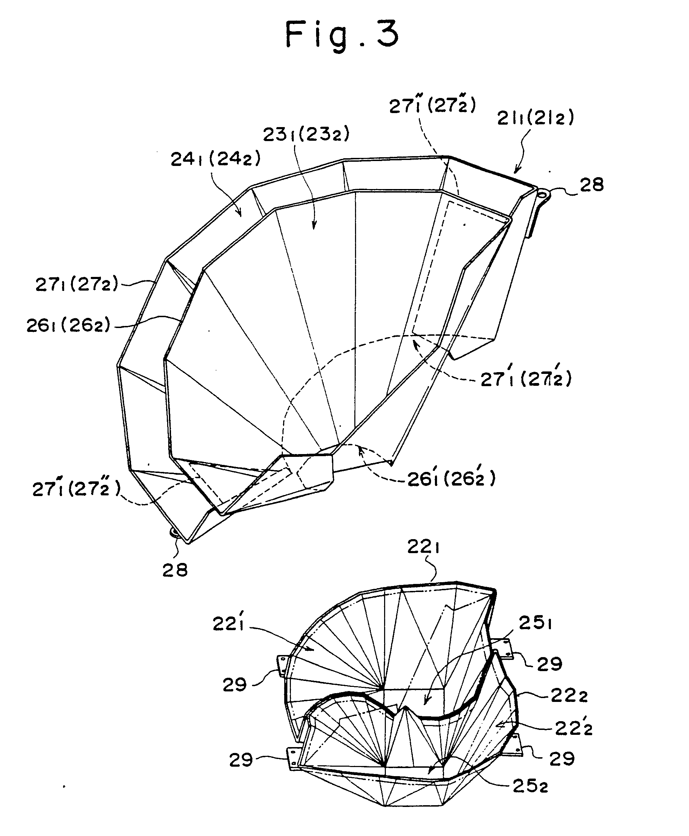

The chute components will be described with reference to Figs. 3 through 5. As shown in Fig. 3, each of the upper chutes $21_1$, $21_2$ is substantially in the form of an inverted half-conical shape. Since the upper chutes $21_1$, $21_2$ are of substantially the same structure, only one of them is shown in Fig. 3. The upper chutes $21_1$, $21_2$ are of double-walled construction composed of inner collection members $26_1$, $26_2$ and outer collection members $27_1$, $27_2$ disposed with clearance gaps defined between themselves and outer side surfaces of the inner collection members $26_1$, $26_2$.

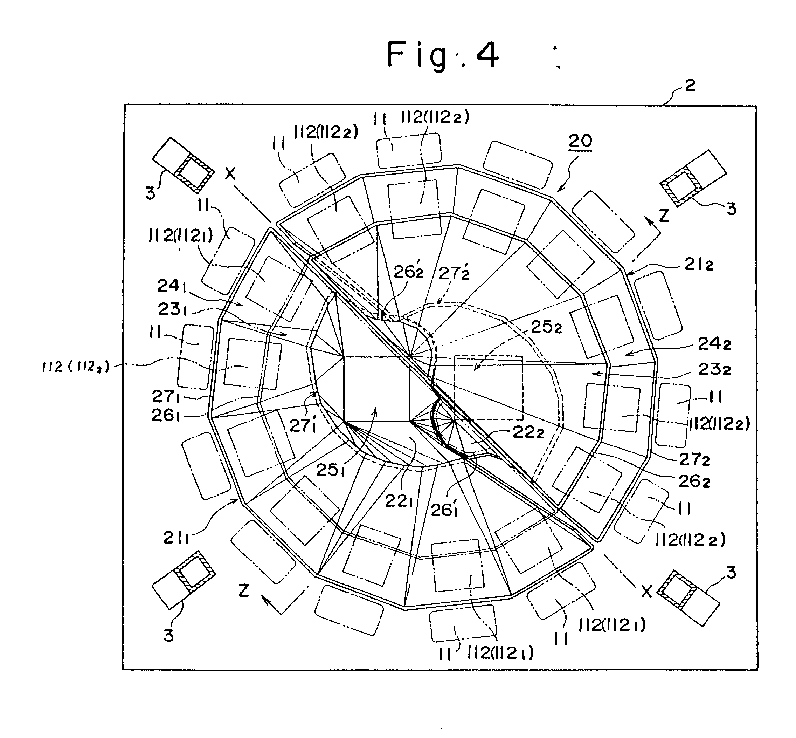

The inner collection members $26_1$, $26_2$ define in their upper ends respective halves of the inner inlet port 23, and the inner collection members $26_1$, $26_2$ together with the outer collection members $27_1$, $27_2$ define respective halves of the annular outer inlet port 24. As illustrated in Fig. 4, the inner collection members $26_1$, $26_2$ and the outer collection members $27_1$, $27_2$ have their upper ends opening concentrically, but have lower open ends $26_1'$, $27_1'$, $26_2'$, $27_2'$ opening substantially symmetrical arrangement in relation to a central vertical axis lying in a diametrical plane X—X at which the inner collection members $26_1$, $26_2$ and the outer collection members $27_1$, $27_2$ are joined with each other.

The first lower chute $22_1$ has an upper open end $22_1'$ opening below both the lower opening $27_1'$ defined by the outer and inner collection members $27_1$, $26_1$ of the first upper chute $21_1$ and the lower opening $26_2'$ defined by the inner collection member $26_2$ of the second upper chute $21_2$. Likewise, the second lower chute $22_2$ has an upper open end $22_2'$ opening below both the lower opening $27_2'$ defined by the outer and inner collection members $27_2$, $26_2$ of the second upper chute $21_2$ and the lower opening $26_1'$ defined by the inner collection meber $26_1$ of the first upper chute $21_1$. The first and second outlet ports $25_1$, $25_2$ are defined respectively in the lower ends of the first and second lower chutes $22_1$, $22_2$.

As shown in Fig. 3, the outer collection member $27_1$ of the first upper chute $21_1$ has inwardly bent portions $27_1''$, $27_1''$ on its opposite ends, and the outer surfaces of opposite ends of the inner collection member $26_1$ are welded or otherwise secured to the inwardly bent portions $27_1''$, $27_1''$, respectively. In this manner, the outer and inner collection members $27_1$, $26_1$ are integrally joined as a double-walled construction. Similarly, the outer collection member $27_2$ of the second upper chute $21_2$ has inwardly bent portions $27_2''$, $27_2''$ on its opposite ends, and the outer surfaces of opposite ends of the inner collection member $26_2$ are welded or otherwise secured to the inwardly bent portions $27_2''$, $27_2''$, respectively, so that the outer and inner collection members $27_2$, $26_2$ are integrally joined as a double-walled construction.

As shown in Fig. 2, the upper chutes $21_1$, $21_2$ are attached to upper surfaces of the base 2 by means of brackets 28 welded or otherwise joined to upper outer peripheral surfaces of the outer collection members $27_1$, $27_2$ of the upper chutes $21_1$, $21_2$. The lower chutes $22_1$, $22_2$ are attached to an attachment plate 40 mounted on a lower portion of the base 2 by means of brackets 29 welded or otherwise joined to outer peripheral surfaces of the lower chutes $22_1$, $22_2$.

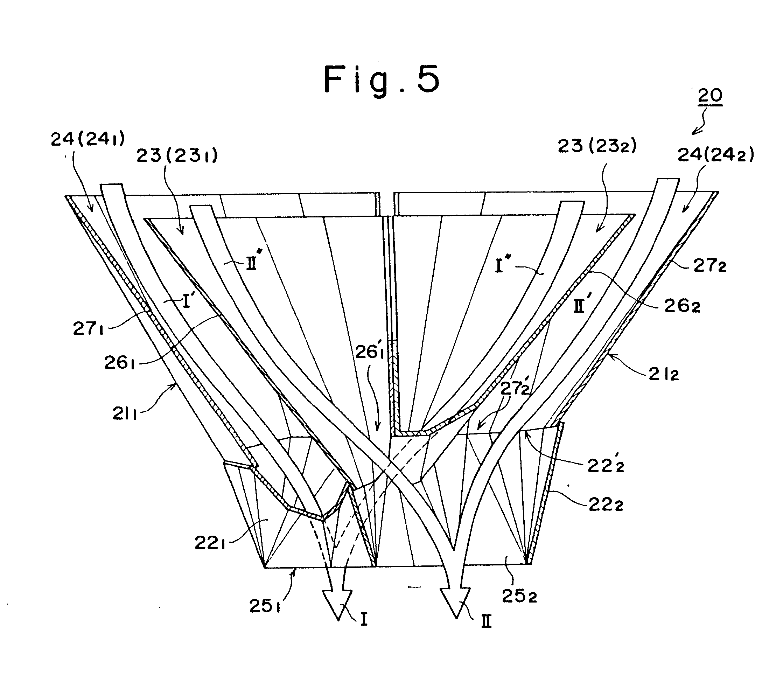

As described above, the collection chute assembly 20 is composed jointly of the upper chutes $21_1$, $21_2$ and the lower chutes $22_1$, $22_2$ connected thereto. As shown in Fig. 5, the assembly 20 defines therein a first collection path I composed of a path I' extending from a first half $24_1$ of the outer inlet port 24 of the first upper chute $21_1$ over the outer collection member $27_1$ of

the first upper chute $21_1$ and a path I'' extending from a second half $23_2$ of the inner inlet port 23 of the second upper chute $21_2$ over the inner collection member $26_2$ of the second upper chute $21_2$, the paths I', I'' being joined in the first lower chute $22_1$ and led to the first outlet port $25_1$. The assembly 20 also defines therein a second collection path II composed of a path II' extending from a second half $24_2$ of the outer inlet port 24 of the second upper chute $21_2$ over the outer collection member $27_2$ of the second upper chute $21_2$ and a path II'' extending from a first half $23_1$ of the inner inlet port 23 of the first upper chute $21_1$ over the inner collection member $26_1$ of the first upper chute $21_1$, the paths II', II'' being joined in the second lower chute $22_2$ and led to the second outlet port $25_2$. The paths I', II', and the paths I'', II'' are inclined at substantially the same angles, and have substantially the same lengths.

In the illustrated embodiment, as shown in Fig. 4, a total of 14 weighing machines 11 or weighing hoppers $11_2$ are arranged in a circular pattern, and they are divided into first and second groups. Seven weighing machines $11_{2_1}$ in the first group are disposed over the first upper chute $21_1$, and seven weighing machines $11_{2_2}$ in the second group are disposed over the second upper chute $21_2$.

Operation of the weighing apparatus with the above assembly 20 will be described. Articles to be weighed are distributed and supplied from the distribution table 7 through the troughs 9 and the pool hoppers 10 into the weighing hoppers $11_2$ of the weighing machines 11, by which the articles are weighed. A combinatorial processor (not shown) effects a combinatorial arithmetic operation on measured weights from the weighing machines 11, selects a combination of added weights which is closest to a target weight, and actuates the hopper opening and closing devices 13 to open the gates $11_{2a}$ or $11_{2b}$ of the weighing hoppers 12 of weighing machines 11 which give the selection combination of added weights. The gates 12a or 12b of the weighing hoppers $11_2$ in the selected combination are opened to discharge the articles from the opened weighing hoppers $11_2$ into the collection chute 20. The weighing hoppers $11_2$ which have discharged the articles are supplied with new articles for the next weighing cycle from the corresponding pool hoppers 10 with their gates 10a opened by the hopper opening and closing devices 13.

In the selected weighing machines 11, when the outer gates $11_{2b}$ of the weighing hoppers $11_{2_1}$ positioned over the first upper chute $21_1$ of the assembly 20 are opened, the inner gates $11_{2a}$ of the weighing hoppers $11_{2_2}$ positioned over the second upper chute $21_2$ are opened. When weighed articles in the next weighing cycle are to be discharged, the inner gates $11_{2a}$ of the weighing hoppers $11_{2_1}$ positioned over the first upper chute $21_1$ and the outer gates 12b of the weighing hoppers $11_{2_2}$ positioned over the second upper chute $21_2$ are opened. Therefore, in one weighing cycle, the articles pass through the first collection path I extending from the first half $24_1$ of the outer inlet port of the first upper chute $21_1$ and the second half $23_2$ of the inner inlet port of the second upper chute $21_2$ toward the first outlet port $25_1$. In the next weighing cycle, the articles pass through the second collection path II extending from the first half $23_1$ of the inner inlet port of the first upper chute $21_1$ and the second half $24_2$ of the outer inlet port of the second upper chute $21_2$ toward the second outlet port $25_2$. Therefore, the articles are discharged alternately through the first and second collection paths I, II and supplied to the packaging apparatus.

As a consequence, the articles weighed in respective weighing cycles in the weighing apparatus are not mixed together in the assembly 20, and can be supplied in reliably separate quantities to the packaging apparatus at a rate twice that of any collection chute having one collection path. Since the paths I, II are of a symmetrical arrangement, the articles pass through the paths I, II in substantially equal periods of time. The articles are supplied to the packaging apparatus at intervals equal to those of weighing cycles in the weighing apparatus.

As illustrated in Fig. 5, the paths I'', II'' cross each other to allow the paths I', II'' and the paths II', II'' in the upper chutes $21_1$, $21_2$ located in opposite relation to each other to be joined into the collection paths I, II. However, since the upper openings $22_1'$, $22_2'$ of the lower chutes $22_1$, $22_2$ are disposed directly below the lower openings $27_1'$, $26_2'$ and $27_2'$, $26_1'$ of the upper chutes $21_1$, $21_2$, the articles will fall substantially vertically from the upper chutes $21_1$, $21_2$ into the lower chutes $22_1$, $22_2$ in which the articles are combined. Thus, the articles will pass through the collection paths I, II in quite a short period of time.

In the foregoing embodiment, articles are weighed in successive cycles of operation in which they are successively supplied to the weighing machines, weighed, the weights are calculated, and the articles are then discharged and supplied to the packaging apparatus. The invention is however applicable to another type of weighing apparatus in which articles are supplied to all of the weighing machines 11, two acceptable combinations of added weights are selected in a single supplying and weighing cycle, and articles from the weighing machines 11 which give such two weight combinations are discharged simultaneously or alternately into the first and second collection paths I, II and then supplied to two packaging apparatus.

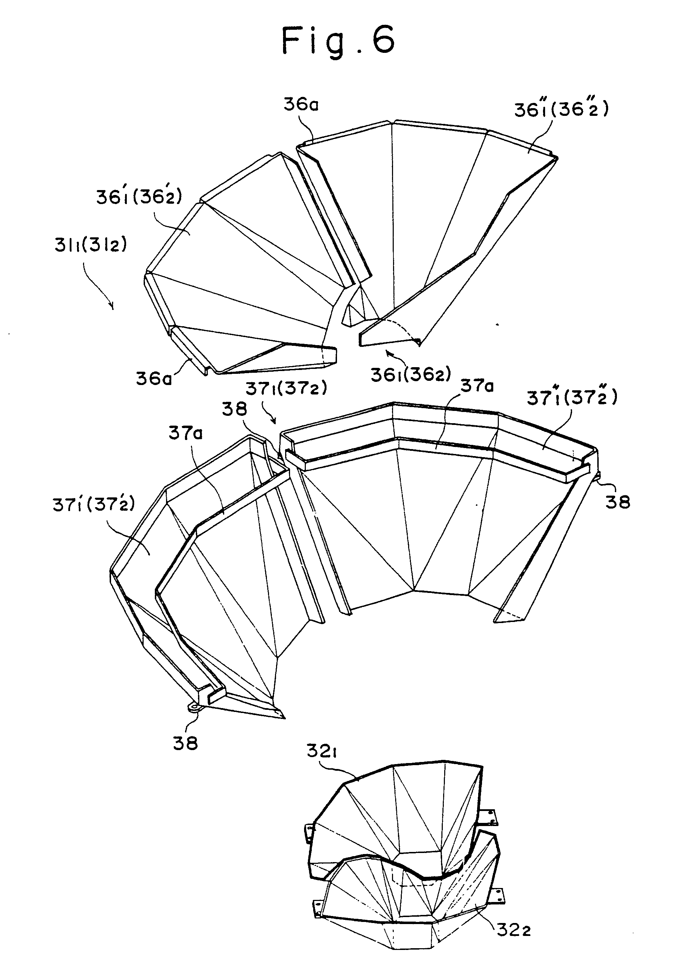

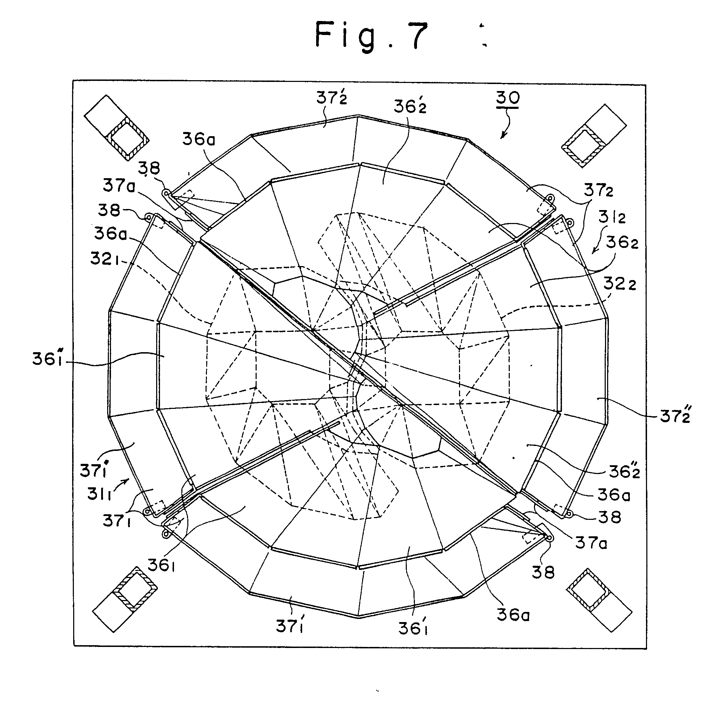

A collection chute assembly for another embodiment will be described with reference to Figs. 6 and 7. The collection chute assembly, generally designated at 30, has substantially semicircular upper chutes $31_1$, $31_2$ each composed of a plurality of components. More specifically, the first upper chute $31_1$ (or the second upper chute $31_2$) comprises an inner collection member $36_1$ ($36_2$) composed of first and second substantially sectorial components $36_1'$, $36_1''$ ($36_2'$, $36_2''$), and an outer collection member $37_1$ ($37_2$) composed of first and second components $37_1'$, $37_1''$ ($37_2'$, $37_2''$). The components $36_1'$, $36_1''$ ($36_2'$, $36_2''$) of the inner collection member $36_1$ ($36_2$) have outwardly and downwardly bent portions 36a extending along upper edges thereof, and the components $37_1'$, $37_1''$ ($37_2'$, $37_2''$) of the outer collection member $37_1$ ($37_2$) have support arms 37a extending between side edges of these components.

The components $37_1'$, $37_1''$ ($37_2'$, $37_2''$) of the outer collection member $37_1$ ($37_2$) are secured to the base 2 by means of brackets 38 fixed to upper outer peripheral surfaces of these components. The components $36_1'$, $36_1''$ ($36_2'$, $36_2''$) of the outer collection member $36_1$ ($36_2$) are supported at their upper ends by the bent portions 36a engaging the support arms 37a of the components $37_1'$, $37_1''$ ($37_2'$, $37_2''$) of the outer collection member $37_1$ ($37_2$), and at their lower ends are held against upper edges of first and second lower chutes $32_1$, $32_2$. The first and second chutes $31_1$, $31_2$ are constructed in substantially the same configuration as that of the first and second upper chutes $21_1$, $21_2$ of the previous embodiment by combining the components $36_1'$, $36_1''$, $37_1'$, $37_1''$ and $36_2'$, $36_2''$, $37_2'$, $37_2''$.

Accordingly, the collection chute assembly of the second embodiment has two collection paths. In particular, since the upper chutes are composed of separable plural components, they can easily be mounted on and detached from the base 2 at the time they are to be cleaned or otherwise serviced. While in the illustrated embodiment each of the inner collection members $36_1$, $36_2$ and outer collection members $37_1$, $37_2$ of the first and second upper chutes $31_1$, $31_2$ is divided into two components, it may be divided into more components.

Although certain preferred embodiments have been shown and described, it should be understood that many changes and modifications may be made therein without departing from the scope of the appended claims.

## Claims

1. An automatic weighing apparatus having a plurality of weighing hoppers (112), for holding articles being weighed, arranged in a circular array above a collection chute assembly (20) which narrows substantially conically in the downward direction and which comprises:

first and second mutually-similar chute structures ($21_1$, $21_2$) including respective inner wall portions ($26_1$, $26_2$) defining respective inner chutes ($23_1$, $23_2$), that are substantially semi-circular in horizontal cross-sectional form and are arranged to opposite sides respectively of a common vertical diametrical plane (X—X), and including also respective outer wall portions ($27_1$, $27_2$) that are substantially semi-circular in horizontal cross-sectional form and extend respectively around the said inner wall portions ($26_1$, $26_2$) at a distance therefrom so that an outer chute ($24_1/24_2$) is defined between the inner and outer wall portions of each of the said chute structures;

each of the said weighing hoppers (112) having first and second gates (112a, 112b) that can be opened respectively to discharge the hopper selectively into the inner or outer chute of the chute structure ($21_1$/$21_2$) below the hopper concerned, and

the said chute assembly (20) further comprising first and second outlet chutes ($22_1$, $22_2$), for providing respective separate outlets ($25_1$, $25_2$) for individual weighed batches of such articles,

the first outlet chute ($22_1$) having an upper rim defining the inlet opening ($22_1'$) of that chute and extending in part adjacent to the lower end ($26_2'$) of the inner chute ($23_2$) of the said second chute structure ($21_2$) and in part adjacent to the lower end ($27_1'$) of the outer wall portion ($27_1$) of the said first chute structure ($21_1$) so that a first area of the said inlet opening ($22_1'$) is located to the same side of the said diametrical plane (X—X) as the said second chute structure ($21_2$), for admitting articles that have passed through the said inner chute ($23_2$) of that structure, and so that a second area of that inlet opening ($22_1'$) is located to the other side of the said diametrical plane (X—X), for admitting articles that have passed through the outer chute ($24_1$) of the said first chute structure ($21_1$), and

the second outlet chute ($22_2$) having an upper rim defining the inlet opening ($22_2'$) of that chute and extending in part adjacent to the lower end ($26_1'$) of the inner chute ($23_1$) of the said first chute structure ($21_1$) and in part adjacent to the lower end ($27_2'$) of the outer wall portion ($27_2$) of the said second chute structure ($21_2$) so that a first area of the inlet opening ($22_2'$) of the second outlet chute ($22_2$) is located to the same side of the said diametrical plane (X—X) as the said first chute structure ($21_1$), for admitting articles that have passed through the said inner chute ($23_1$) of that structure, and so that a second area of that inlet opening ($22_2'$) is located to the same side of the said diametrical plane (X—X) as the said second chute structure ($21_2$), for admitting, articles that have passed through the outer chute ($24_2$) of the said second chute structure ($21_2$).

2. Apparatus as claimed in claim 1, wherein each of the said two chute structures has its inner and outer wall portions integrally joined together.

3. Apparatus as claimed in claim 1, wherein each of the said two chute structures has its inner and outer wall portions separately coupled together, each of said inner and outer wall portions being composed of a plurality of substantially sectorial separate components.

**Patentansprüche**

1. Automatische Wägevorrichtung mit mehreren Wägebehältern (112) zum Aufnehmen von Artikeln beim Wägen, welche in kreisförmiger Anordnung über einer Sammelrutschenvorrichtung (20) angeordnet sind, welche sich nach unten im wesentlichen konisch verjüngt und umfaßt:

erste und zweite einander ähnliche Rutschenstrukturen ($21_1$, $21_2$) mit jeweiligen an jeweils gegenüberliegenden Seiten einer gemeinsamen vertikalen diametralen Ebene (X—X) angeordneten inneren Wandteilen ($26_1$, $26_2$) von im wesentlichen halbkreisförmigem horizontalem Querschnitt, die jeweilige Innenrutschen ($23_1$, $23_2$) begrenzen, und ferner mit jeweiligen äußeren Wandteilen ($27_1$, $27_2$), die im wesentlichen halbkreisförmigen horizontalen Querschnitt aufweisen und sich jeweils in einem Abstand um die inneren Wandteile ($26_1$, $26_2$) erstrecken, so daß zwischen dem inneren und dem äußeren Wandteil jeder der Rutschenstrukturen eine Außenrutsche ($24_1$/$24_2$) begrenzt ist;

wobei jeder der Wägebehälter (112) erste und zweite Tore (112a, 112b) aufweist, die jeweils zum Entleeren des Behälters wahlweise in die Innen- oder die Außenrutsche der unter dem betreffenden Behälter befindlichen Rutschenstruktur ($21_1$/$21_2$) geöffnet werden können, und

wobei die Rutschenvorrichtung (20) ferner erste und zweite Auslaßrutschen ($22_1$, $22_2$) zum Vorsehen jeweiliger separater Auslässe ($25_1$, $25_2$) für individuelle gewogene Chargen solcher Artikel aufweist,

wobei die erste Auslaßrutsche ($22_1$) einen oberen Rand aufweist, der die Einlaßöffnung ($22_1'$) dieser Rutsche begrenzt und sich teilweise nahe des unteren Endes ($26_2'$) der Innenrutsche ($23_2$) der zweiten Rutschenstruktur ($21_2$) und teilweise nahe dem unteren Ende ($27_1'$) des äußeren Wandteils ($27_1$) der ersten Rutschenstruktur ($21_1$) erstreckt, so daß ein erster Bereich der Einlaßöffnung ($22_1'$) an der selben Seite der diametralen Ebene (X—X) liegt, wie die zweite Rutschenstruktur ($21_2$), zum Durchlassen von Artikeln, welche die Innenrutsche ($23_2$) dieser Struktur passiert haben und so daß ein zweiter Bereich dieser Einlaßöffnung ($22_1'$) an der anderen Seite der diametralen Ebene (X—X) liegt, zum Durchlassen von Artikeln, welche die Außenrutsche ($24_1$) der ersten Rutschenstruktur ($21_1$) passiert haben, und

die zweite Auslaßrutsche ($22_2$) einen oberen Rand aufweist, der die Einlaßöffnung ($22_2'$) dieser Rutsche begrenzt und sich teilweise nahe dem unteren Ende ($26_1'$) der Innenrutsche ($23_1$) der ersten Rutschenstruktur ($21_1$) und teilweise nahe dem unteren Ende ($27_2'$) des äußeren Wandteils ($27_2$) der zweiten Rutschenkstruktur ($21_2$) erstreckt, so daß ein erster Bereich der Einlaßöffnung ($22_2'$) der zweiten Auslaßrutsche ($22_2$) an der selben Seite der diametralen Ebene (X—X) liegt, wie die erste Rutschenstruktur ($21_1$), zum Durchlassen von Artikeln, welche die Innenrutsche ($23_1$) dieser Struktur passiert haben und so daß ein zweiter Bereich dieser Einlaßöffnung ($22_2'$) an der selben Seite der diametralen Ebene (X—X) liegt, wie die zweite Rutschenstruktur ($21_2$), zum Durchlassen von Artikeln, welche die Außenrutsche ($24_2$) der zweiten Rutschenstruktur ($21_2$) passiert haben.

2. Vorrichtung nach Anspruch 1, bei der die inneren und die äußeren Wandteile jeder der beiden Rutschenstrukturen einstückig verbunden sind.

3. Vorrichtung nach Anspruch 1, bei der die inneren und die äußeren Wandteile jeder der beiden Rutschenstrukturen lösbar miteinander gekupplet sind, wobei jeder der inneren und äußeren Wandteile aus mehreren im wesentlichen sektorförmigen getrennten Komponenten besteht.

**Revendications**

1. Appareil de pesage automatique ayant une pluralité de trémies de pesage (112), pour contenir des articles pesés, disposées en un groupement circulaire au-dessus d'un ensemble de goulottes de collecte (20) qui se rétrécit de façon sensiblement conique dans la direction descendante et qui comporte:

des première et deuxième structures de goulottes similaires l'une à l'autre ($21_1$, $21_2$) comportant des parties de paroi intérieures respectives ($26_1$, $26_2$) définissant des goulottes intérieures respectives ($23_1$, $23_2$), qui ont une forme de section transversale horizontale sensiblement semi-circulaire et qui sont disposées respectivement sur les côtés opposés d'un plan commun vertical diamétral (X—X), et comportant également des parties de paroi extérieures respectives ($27_1$, $27_2$) qui ont une forme de section transversale horizontale sensiblement semicirculaire et qui s'étendent respectivement autour desdites parties de paroi intérieures ($26_1$, $26_2$) à une certaine distance de celles-ci de telle sorte qu'une goulotte extérieure ($24_1/24_2$) soit définie entre les parties de paroi intérieures et extérieures de chacune desdites structures de goulotte;

chacune desdites trémies de pesage (112) ayant des première et deuxième portes (112a, 112b) qui peuvent être ouvertes respectivement pour décharger la trémie sélectivement dans la goulotte intérieure ou extérieure de la structure de goulotte ($21_1/21_2$) en dessous de la trémie concernée, et

ledit ensemble de goulotte (20) comportant de plus des première et deuxième goulottes de sortie ($22_1$, $22_2$), pour procurer des orifices de sortie séparés respectifs ($25_1$, $25_2$) pour des lots pesés individuels de ces articles.

la première goulotte de sortie ($22_1$) ayant un bord supérieur définissant l'ouverture d'entrée ($22_1'$) de cette goulotte et s'étendant en partie au voisinage de l'extrémité inférieure ($26_2'$) de la goulotte intérieure ($23_2$) de ladite deuxième structure de goulotte ($21_2$) et en partie au voisinage de l'extrémité inférieure ($27_1'$) de la partie de paroi extérieure ($27_1$) de ladite première structure de goulotte ($21_1$) de telle sorte qu'une première zone de ladite ouverture d'entrée ($22_1'$) soit située du même côté dudit plan diamétral (X—X) que ladite deuxième structure de goulotte ($21_2$), de façon à admettre des articles qui ont passé à travers ladite goulotte intérieure ($23_2$) de cette structure, et de telle sorte qu'une deuxième zone de cette ouverture d'entrée ($22_1'$) soit située de l'autre côté dudit plan diamétral (X—X), de façon à admettre des articles qui ont passé à travers la goulotte extérieure ($24_1$) de ladite première structure de goulotte ($21_1$), et

la deuxième goulotte de sortie ($22_2$) ayant un bord supérieur définissant l'ouverture d'entrée ($22_2'$) de cette goulotte et s'étendant en partie en voisinage de l'extrémité inférieure ($26_1'$) de la goulotte intérieure ($23_1$) de ladite première structure de goulotte ($21_1$) et en partie au voisinage de l'extrémité inférieure ($27_2'$) de la partie de paroi extérieure ($27_2$) de ladite deuxième structure de goulotte ($21_2$) de telle sorte qu'une première zone de l'ouverture d'entrée ($22_2'$) de la deuxième goulotte de sortie ($22_2$) soit située du même côté dudit plan diamétral (X—X) que ladite première structure de goulotte ($21_1$), pour admettre des articles qui ont passé à travers ladite goulotte intérieure ($23_1$) de cette structure, et de telle sorte qu'une deuxième zone de cette ouverture d'entrée ($22_2'$) soit située du même côté dudit plan diamétral (X—X) que ladite deuxième structure de goulotte ($21_2$), pour admettre des articles qui ont passé à travers la goulotte extérieure ($24_2$) de ladite deuxième structure de goulotte ($21_2$).

2. Appareil selon la revendication 1, dans lequel chacune desdites deux structures de goulotte a ses parties de paroi intérieures et extérieures qui sont réunies de façon à faire partie intégrante les unes des autres.

3. Appareil selon la revendication 1, dans lequel chacune desdites deux structures de goulotte a ses parties de paroi intérieures et extérieures qui sont couplées de façon séparable les unes aux autres, chacune desdites parties de paroi intérieures et extérieures étant composée d'une pluralité de composants séparés sensiblement sectoriels.

# Fig. I

# Fig. 2

2

# Fig.3

# Fig. 4

EP 0 141 670 B1

Fig. 5

# Fig.6

# Fig. 7